(19)

Europäisches Patentamt
European Patent Office
Office européen des brevets

(11)  **EP 4 471 516 A1**

(12)  **EUROPEAN PATENT APPLICATION**
published in accordance with Art. 153(4) EPC

(43) Date of publication:
**04.12.2024 Bulletin 2024/49**

(21) Application number: **22921665.0**

(22) Date of filing: **06.12.2022**

(51) International Patent Classification (IPC):
**G05B 19/404** (2006.01)   **G01B 9/02** (2022.01)

(52) Cooperative Patent Classification (CPC):
**Y02P 90/02**

(86) International application number:
**PCT/CN2022/136802**

(87) International publication number:
**WO 2023/138241 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.01.2022   CN 202210079627**

(71) Applicant: **Kede Numerical Control Co., Ltd.**
**Dalian, Liaoning 116000 (CN)**

(72) Inventors:
• **CHEN, Hu**
  **Dalian, Liaoning 116000 (CN)**
• **HAO, Tianyang**
  **Dalian, Liaoning 116000 (CN)**
• **SUN, Hongliang**
  **Dalian, Liaoning 116000 (CN)**

• **FENG, Zhaobing**
  **Dalian, Liaoning 116000 (CN)**
• **HOU, Yue**
  **Dalian, Liaoning 116000 (CN)**
• **JIN, Xiaozhong**
  **Dalian, Liaoning 116000 (CN)**
• **LIU, Naibo**
  **Dalian, Liaoning 116000 (CN)**
• **XUE, Hongxin**
  **Dalian, Liaoning 116000 (CN)**
• **WANG, Ziming**
  **Dalian, Liaoning 116000 (CN)**
• **WU, Qi**
  **Dalian, Liaoning 116000 (CN)**

(74) Representative: **JD&P Patent Attorneys**
**Joanna Dargiewicz & Partners**
**ul. Mysliborska 93A/50**
**03-185 Warszawa (PL)**

(54)  **MACHINE TOOL RAPID COMPENSATION SYSTEM BASED ON PRINCIPLE OF LASER INTERFERENCE, AND COMPENSATION METHOD THEREOF**

(57)    A machine tool rapid compensation system and a compensation method thereof based on a principle of laser interferometry includes: a trigger acquisition module, a laser interferometry measurement module, a data analysis and compensation module, and a communication module; the trigger acquisition module receives a trigger acquisition instruction, converts an encoder position value into a pulse value, and transmits the pulse value to the laser interferometry measurement module, retrieves parameter information of each axis and compensation point information of a machine tool from a numerical control system, and generates a machine tool operation code and a measurement preparation signal; the laser interferometry measurement module receives the measurement preparation signal and the pulse value to obtain error data, environmental data, and expansion compensation values; the data analysis and compensation module collects the error data, the environmental data, and the expansion compensation values for analysis to obtain precision parameters and compensation parameters, and transmits the precision parameters and the compensation parameters to the numerical control system through the communication module. The present invention utilizes a laser interferometry measurement device and a trigger acquisition device to measure mechanical precision, thereby achieving higher measurement efficiency and ensuring that the measurement is more accurate and rapid.

**EP 4 471 516 A1**

FIG. 1

## Description

## Technical Field

The present invention relates to a field of numerical control machine tools, particularly to a machine tool rapid compensation system and a compensation method thereof based on a principle of laser interferometry.

## Background Art

Currently, existing machine tool measurement and compensation equipment need to be installed outside a machine tool, requiring additional power supply and auxiliary equipment setup. An operator needs to repeatedly adjust a light. Furthermore, an operator needs to set machine tool-related parameters, compensation-related parameters, generate additional machine tool programs, and transfer compensation parameters manually or using storage devices. Thus, measurement time is long and efficiency is low, requiring a high level of operational skill for personnel, machine tools, and measurement equipment, making rapid implementation unattainable. Precision measurement is prone to errors in operation, parameter reading and writing, and compensation value writing, and regular maintenance of the machine tool cannot be achieved.

## Summary of Invention

The present invention provides a machine tool rapid compensation system and a compensation method thereof based on a principle of laser interferometry to overcome problems such as the need for additional auxiliary devices and power supply, cumbersome equipment operation, long measurement time, low efficiency, poor measurement precision, high operator requirements, and the inability to achieve regular maintenance of the machine tool.

## Technical Problem

To achieve the above objectives, the technical solution of the present invention is:

a machine tool rapid compensation system based on a principle of laser interferometry, the system including: a trigger acquisition module, a laser interferometry measurement module, a data analysis and compensation module, and a communication module;

the trigger acquisition module is connected to a machine tool encoder, a numerical control system, and the laser interferometry measurement module;

the trigger acquisition module receives a trigger acquisition instruction issued by the numerical control system, converts a machine tool encoder position value into a pulse value, and transmits the pulse value to the laser interferometry measurement module, and simultaneously, the trigger acquisition module retrieves parameter information of each axis and compensation point information of a machine tool from the numerical control system, and generates a machine tool operation code and a measurement preparation signal;

the laser interferometry measurement module includes a laser head, an environmental sensor, a temperature sensor, an optical path turning device, a linear interferometer, and a linear reflector;

the laser head, the linear interferometer, and the optical path turning device are placed at an end of a stroke of each axis of the numerical control machine tool, the laser head receives the measurement preparation signal and the pulse value to emit a laser, the laser passes through the linear interferometer and is redirected by the optical path turning device towards X, Y, and Z axes of the machine tool, respectively, and the linear interferometer, in cooperation with the linear reflector, obtains error data of the X, Y, and Z axes of the machine tool, the environmental sensor collects an air temperature value, a humidity value, and an atmospheric pressure value, and transmits the air temperature value, the humidity value, and the atmospheric pressure value to the laser head to obtain environmental data, the temperature sensor collects material temperature values of the X, Y, and Z axes of the machine tool and transmits the material temperature values to the laser head to obtain expansion compensation values;

the data analysis and compensation module collects the error data, the environmental data, and the expansion compensation values for analysis to obtain precision parameters and compensation parameters, the precision parameters are used for a precision analysis of the numerical control system, and the compensation parameters are used for a data compensation of the machine tool; and

the communication module connects the numerical control system and the data analysis and compensation module, the communication module reads preset compensation settings in the numerical control system and transmits the compensation parameters and the precision parameters generated by the data analysis and compensation module to the numerical control system.

In a specific embodiment, the parameter information of each axis of the machine tool includes stroke parameters of the X, Y, and Z axes of the machine tool, a soft limit position of the machine tool, and a machine tool ratio.

A compensation method utilizing the machine tool rapid compensation system based on the principle of laser interferometry, the method including:

Step 1: the numerical control system reading a machine tool information and setting the trigger acquisition instruction, and the trigger acquisition module receiving the trigger acquisition instruction, and generating the machine tool operation code and the measurement preparation signal;

Step 2: the laser interferometry measurement module receiving the measurement preparation signal for measurement, adjusting the linear interferometer and the optical path turning device for mechanical precision measurement of the axes to obtain the error data of the X, Y, and Z axes of the machine tool, and simultaneously obtaining the environmental data and the expansion compensation values;

Step 3: the data analysis and compensation module collecting the error data, the environmental data, and the expansion compensation values for analysis to obtain first precision parameters and first compensation parameters;

Step 4: the numerical control system receiving the first precision parameters and the first compensation parameters for precision analysis and data compensation.

In a specific embodiment, Step 1 specifically includes:

Step 1.1: the numerical control system reading the machine tool information and setting the trigger acquisition instruction;

Step 1.2: the trigger acquisition module receiving the trigger acquisition instruction, retrieving the parameter information of each axis and the compensation point information, which is preset, of the machine tool from the numerical control system, and obtaining the machine tool operation code and the measurement preparation signal based on a data interval and a data starting point of the parameter information of each axis and the compensation point information of the machine tool;

Step 1.3: inputting the machine tool operation code into the numerical control system to wait for execution while the linear reflector is called up;

Step 1.4: executing the machine tool operation code, and the laser interferometry detection module receiving the measurement preparation signal;

Step 1.5: the trigger acquisition module collecting the machine tool encoder position value, converting the machine tool encoder position value into the pulse value, and transmitting the pulse value to the laser interferometry measurement module.

In a specific embodiment, Step 2 specifically includes:

Step 2.1: the optical path turning device and the linear reflector adjusting an optical path for mechanical precision measurement of the axes;

Step 2.2: adjusting the optical path turning device according to a type of a measurement axis, a type and a model of the machine tool to direct a laser towards the measurement axis to adjust a light beam;

Step 2.3: the laser interferometry detection module performing detection based on the measurement preparation signal and the pulse value to obtain the error data, the environmental data, and the expansion compensation values;

Step 2.4: storing the error data, the environmental data, and the expansion compensation values to wait for analysis by the data analysis and compensation module.

In a specific embodiment, in Step 3, the data analysis and compensation module collects the error data, the environmental data, and the expansion compensation values, analyzes and compares the error data, the environmental data, and the expansion compensation values with preset parameter standards, and obtains the first precision parameters and the first compensation parameters.

In a specific embodiment, the process of obtaining the first compensation parameters includes:

Step 3.1: performing compensation type data processing on the error data, the environmental data, and the expansion compensation values to obtain position deviation values;

Step 3.2: performing sign normalization processing on the position deviation values to obtain error values;

Step 3.3: calculating the compensation value of error values as the first compensation parameters based on a reference point, a compensation resolution, and a calculation type.

A specific embodiment further includes Step 5, Step 5 is specifically as follows.

Step 5: the data analysis and compensation module setting initial evaluation parameters, and comparing the first precision parameters and the first compensation parameters with the initial evaluation parameters, and when the first precision parameters and the first compensation parameters exceed a preset parameter range, repeating Steps 1 to 4 to obtain second precision parameters and second compensation parameters.

In a specific embodiment, Step 5 further includes: using the trigger acquisition module to change the compensation point information to obtain the second precision parameters and the second compensation parameters.

Advantageous Effects of Invention

The present invention utilizes a laser interferometry measurement device and a trigger acquisition device to measure mechanical precision, thereby achieving higher measurement efficiency and ensuring that the measurement is more accurate and rapid. Additionally, the data analysis and compensation module is included to load the compensation values into the numerical control system to achieve automated control. The laser interferometry measurement module and the trigger acquisition module are fixed inside the machine tool, avoiding repeated installation and removal, making the machine tool convenient to use.

**Brief Description of Drawings**

In order to illustrate the embodiments of the present invention or the technical solutions in the prior art more clearly, the following briefly introduces the accompanying drawings that need to be used in the description of the embodiments or the prior art. Obviously, the accompanying drawings in the following description are some embodiments of the present invention, and for a person skilled in the art, other drawings can also be obtained from these accompanying drawings without creative effort.

Fig. 1 is a schematic structural diagram of a compensation system of the present invention.
Fig. 2 is a schematic logical structure diagram of the compensation system of the present invention.
Fig. 3 is an effect diagram after the application of the present invention.

**Description of Embodiments**

In order to make the purposes, technical solutions and advantages of the embodiments of the present invention clearer, the technical solutions in the embodiments of the present invention will be clearly and completely described below with reference to the accompanying drawings in the embodiments of the present invention. Obviously, the embodiments to be described are some, but not all, embodiments of the present invention. Based on the embodiments of the present invention, all other embodiments obtained by a person skilled in the art without creative efforts are within the protection scope of the present invention.

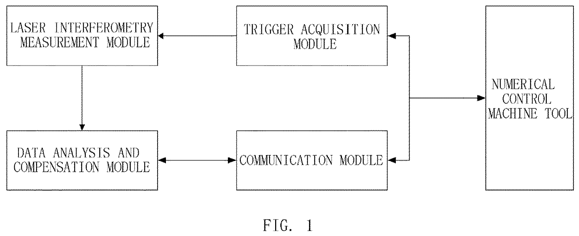

The present embodiment provides a machine tool rapid compensation system based on a principle of laser interferometry, as shown in Fig. 1, the system including: a trigger acquisition module, a laser interferometry measurement module, a data analysis and compensation module, and a communication module;

the trigger acquisition module is connected to a machine tool encoder, a numerical control system, and the laser interferometry measurement module;
the trigger acquisition module receives a trigger acquisition instruction issued by the numerical control system, converts a machine tool encoder position value into a pulse value, and transmits the pulse value to the laser interferometry measurement module, and simultaneously, the trigger acquisition module retrieves parameter information of each axis and compensation point information of a machine tool from the numerical control system, and generates a machine tool operation code and a measurement preparation signal;

the laser interferometry measurement module includes a laser head, an environmental sensor, a temperature sensor, an optical path turning device, a linear interferometer, and a linear reflector;

depending on the type and application situation of the machine tool, the positions of the laser head, the linear interferometer, and the optical path turning device can be adjusted, and the laser head, the linear interferometer, and the optical path turning device can be placed at the end of the stroke of each axis of the numerical control machine tool or at a fixed position on a moving axis, the laser head receives the measurement preparation signal and pulse value to emit a laser, the laser passes through the linear interferometer and is redirected by the optical path turning device towards the X, Y, and Z axes of the machine tool, respectively, and the linear interferometer, in cooperation with the linear reflector, obtains error data of the X, Y, and Z axes of the machine tool, the environmental sensor collects air temperature value, humidity value, and atmospheric pressure value, and transmits these values to the laser head to obtain environmental data, the temperature sensor collects the material temperature values of the X, Y, and Z axes of the machine tool and transmits these values to the laser head to obtain expansion compensation values;

the data analysis and compensation module collects the error data, the environmental data, and the expansion compensation values for analysis to obtain precision parameters and compensation parameters, the precision parameters are used for a precision analysis of the numerical control system, and the compensation parameters are used for a data compensation of the machine tool; and

the communication module connects the numerical control system and the data analysis and compensation module, the communication module reads preset compensation settings in the numerical control system and transmits the compensation parameters and the precision parameters generated by the data analysis and compensation module to the numerical control system.

In a specific embodiment, the parameter information of each axis of the machine tool includes stroke parameters of the X, Y, and Z axes of the machine tool, a soft limit position of the machine tool, and a machine tool ratio.

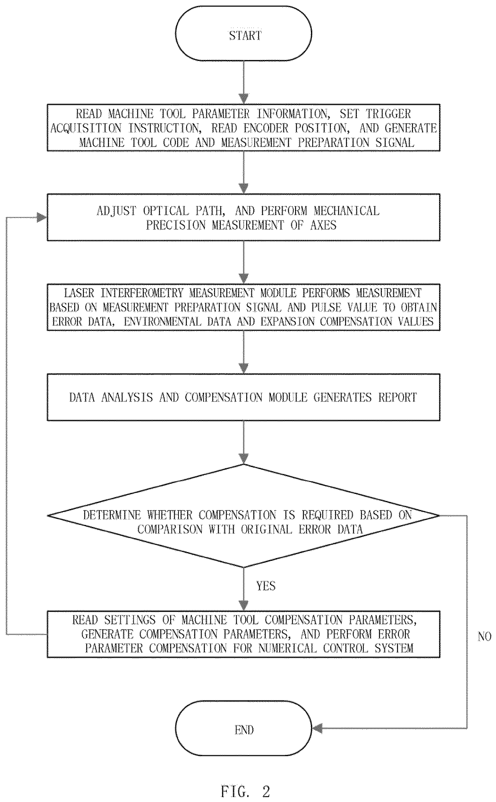

For the same purpose, as shown in Fig. 2, the present invention also provides a compensation method of the machine tool rapid compensation system based on the principle of laser interferometry, the method including:

Step 1: the numerical control system reading a machine tool information and setting the trigger acquisition instruction, and the trigger acquisition module receiving the trigger acquisition instruction, and generating the machine tool operation code and the measurement preparation signal;

Step 2: the laser interferometry measurement module receiving the measurement preparation signal for measurement, adjusting the linear interferometer and the optical path turning device for mechanical precision measurement of the axes to obtain the error data of the X, Y, and Z axes of the machine tool, and simultaneously obtaining the environmental data and the expansion compensation values;

Step 3: the data analysis and compensation module collecting the error data, the environmental data, and the expansion compensation values for analysis to obtain first precision parameters and first compensation parameters;

Step 4: the numerical control system receiving the first precision parameters and the first compensation parameters for precision analysis and data compensation.

In a specific embodiment, Step 1 specifically includes:

Step 1.1: the numerical control system reading the machine tool information and setting the trigger acquisition instruction;

Step 1.2: the trigger acquisition module receiving the trigger acquisition instruction, retrieving the parameter information of each axis and the compensation point information, which is preset, of the machine tool from the numerical control system, and obtaining the machine tool operation code and the measurement preparation signal based on a data interval and a data starting point of the parameter information of each axis and the compensation point information of the machine tool;

Step 1.3: inputting the machine tool operation code into the numerical control system to wait for execution while the linear reflector is called up;

Step 1.4: executing the machine tool operation code, and the laser interferometry detection module receiving the measurement preparation signal;

Step 1.5: the trigger acquisition module collecting the machine tool encoder position value, converting the machine tool encoder position value into the pulse value, and transmitting the pulse value to the laser interferometry measurement module.

In a specific embodiment, Step 2 specifically includes:

Step 2.1: the optical path turning device and the linear reflector adjusting an optical path for mechanical precision measurement of the axes;

Step 2.2: adjusting the optical path turning device according to a type of a measurement axis, a type and a model of the machine tool to direct a laser towards the measurement axis to adjust a light beam; for example, for gantry structures and machining centers, the laser head, the linear interferometer, and the optical path turning device can be placed at the end of the stroke of each axis, and for single moving axes or grinder structures, the components can be placed at a fixed position on the axis;

Step 2.3: the laser interferometry detection module performing detection based on the measurement preparation signal and the pulse value to obtain the error data, the environmental data, and the expansion compensation values;

wherein the error data is position deviation, and the specific calculation formula for position deviation is:

$x_{ij} = P_{ji} - P_i$;

wherein i is the number of measurement runs, j is the specific target point in the number of measurements, target position: $P_i$ (i = 1 to m), actual position: $P_{ij}$ (i = 1 to m, j = 1 to n);

the unidirectional average position deviation of a

$$\bar{x}_i\uparrow=\frac{1}{n}\sum_{j=1}^{n}x_{ij}\uparrow \quad \bar{x}_i\downarrow=\frac{1}{n}\sum_{j=1}^{n}x_{ij}\downarrow$$

certain position is , ; the bidirectional average position deviation of a certain

$$\bar{x}_i=\frac{\bar{x}_i\uparrow+\bar{x}_i\downarrow}{2}$$

position is ;

Step 2.4: storing the error data, the environmental data, and the expansion compensation values to wait for analysis by the data analysis and compensation module.

The data analysis and compensation module performs data analysis and report generation based on relevant standards, analyzing and determining whether compensation is necessary, such as performing deviation position data analysis on the collected position deviation data according to ISO, GB, JIS, ASME, and VDI standards. The analyzed data parameters and images are automatically stored for operator review. Simultaneously, whether the system requires compensation is determined based on pre-set parameter standards (such as: positioning precision, repeat positioning precision, backlash, etc., in ISO). For data exceeding the parameter standards, data compensation is performed and the number of compensations is recorded. That is, after each compensation, it is determined again whether the data still exceeds the parameter standards. If the data does not exceed the parameter standards, no further compensation is required, and if the data still exceeds the parameter standards, data compensation is performed again. And if the compensation has been performed three times and the data still does not meet the standards, the system analyzes the data to suggest possible issues for on-site personnel to reference and troubleshoot.

In a specific embodiment, in Step 3, the data analysis and compensation module collects the error data, the environmental data, and the expansion compensation values, analyzes and compares the error data, the environmental data, and the expansion compensation values with preset parameter standards, and obtains the first precision parameters and the first compensation parameters.

The communication module reads the preset parameter standards in the numerical control system (such as: compensation reference points, compensation intervals, compensation start and end points, compensation methods, compensation types, calculation types, etc.) through an RJ45 communication port;

In a specific embodiment, the process of obtaining the first compensation parameters $z_{ij}$ or $z_{ij}\uparrow$ and $z_{ij}\downarrow$ includes:

Step 3.1: obtaining the position deviation value based on the compensation type: for standard compensation, the position deviation value is calculated as: $x_{ij} = \dfrac{x_{ij}\uparrow + x_{ij}\downarrow}{2}$ ; the position deviation values for bidirectional compensation are $x_{ij}\uparrow$ and $x_{ij}\downarrow$, respectively;

Step 3.2: performing sign normalization processing on the position deviation values to obtain error values as $y_{ij} = x_{ij}$; or $y_{ij}\uparrow = x_{ij}\uparrow$ and $y_{ij}\downarrow = x_{ij}\downarrow$, for compensation value, $y_{ij} = -x_{ij}$; or $y_{ij}\uparrow = -x_{ij}\uparrow$ and $y_{ij}\downarrow = -x_{ij}\downarrow$;

Step 3.3: calculating the actual compensation value based on a reference point $\beta$, a compensation resolution $\partial$, and the calculation type.

When the calculation type is absolute:

$$z_{ij} = \frac{y_{ij} - \beta}{\partial} \quad \text{or} \quad z_{ij}\uparrow = \frac{y_{ij}\uparrow - \beta}{\partial} \quad \text{and}$$

$$z_{ij}\downarrow = \frac{y_{ij}\downarrow - \beta}{\partial} \quad ;$$

When the calculation type is incremental:

$$z_{ij} = \frac{y_{ij+1} - y_{ij}}{\partial} \quad \text{or} \quad z_{ij}\uparrow = \frac{y_{ij+1}\uparrow - y_{ij}\uparrow}{\partial} \quad \text{and}$$

$$z_{ij}\downarrow = \frac{y_{ij+1}\downarrow - y_{ij}\downarrow}{\partial} \quad ;$$ wherein $z_{ij}$ is the compensation value, $z_{ij}\uparrow$ is a positive compensation value, and $z_{ij}\downarrow$ is a negative compensation value.

A specific embodiment further includes Step 5, Step 5 is specifically as follows.

Step 5: the data analysis and compensation module setting initial evaluation parameters, and comparing the first precision parameters and the first compensation parameters with the initial evaluation parameters, and when the first precision parameters and the first compensation parameters exceed a preset parameter range, repeating Steps 1 to 4 to obtain second precision parameters and second compensation parameters. When the preset parameter range is exceeded, it indicates that the compensation parameters and precision parameters are not ideal, requiring a second acquisition of compensation parameters and precision parameters to be superimposed with the first set of compensation parameters and precision parameters for verification by the numerical control system, and so on until the parameter range is met.

In a specific embodiment, Step 5 further includes: using the trigger acquisition module to change the compensation point information to obtain the second precision parameters and second compensation parameters, specifically, changing the compensation point information based on the measurement point information, wherein the measurement point information includes stroke information obtained by the trigger module from the machine tool and manually set compensation parameters;

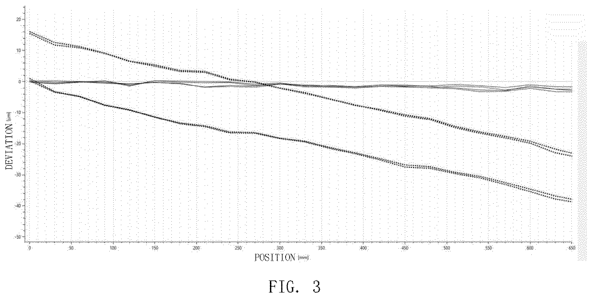

as shown in Fig. 3, this method is implemented in a machining center; using third-party instruments to verify the actual effect, Fig. 3 shows the position error comparison of the Z-axis before and after compensation, wherein the solid line represents the curve before compensation, and the dashed line represents the curve after compensation, and according to the international standard ISO230-22006, a positioning precision before the analysis and compensation is 57.7 um; a repetition precision is 18.3 um; a positioning systematic deviation is 56 um;

after using this method for measurement and compensation, the positioning precision is 4.7 um; the repetition precision is 3.1 um; the positioning system deviation is 3.5 um, and thus, the precision data of the machine tool after compensation has been significantly improved.

The precision of measurement of the present invention can reach $\pm 0.5$ PPM, the maximum acquisition speed can reach 4 m/s, and the highest sampling frequency can reach 10 kHz. High-speed, high-frequency, and precise data acquisition can be achieved.

Finally, it should be noted that: the above embodiments are only used to illustrate the technical solutions of the present invention, but not to limit them; although the present invention has been described in detail with reference to the foregoing embodiments, a person skilled in the art should understand that: the technical solutions described in the foregoing embodiments can still be modified, or some or all of the technical features thereof can be equivalently substituted. However, these modifications or substitutions do not make the essence of the corresponding technical solutions deviate from the scope of the technical solutions of the embodiments of the present invention.

## Claims

1. A machine tool rapid compensation system based on a principle of laser interferometry, the machine tool rapid compensation system comprising: a trigger acquisition module; a laser interferometry measurement module; a data analysis and compensation module; and a communication module, wherein

> the trigger acquisition module is connected to a machine tool encoder, a numerical control system, and the laser interferometry measurement module; the trigger acquisition module receives a trigger acquisition instruction issued by the numerical control system, converts a machine tool encoder position value into a pulse value, and transmits the pulse value to the laser interferometry measurement module, and simultaneously, the trigger acquisition module retrieves parameter information of each axis and compensation point information of a machine tool from the numerical control system, and generates a machine tool operation code and a measurement preparation signal;
> the laser interferometry measurement module includes a laser head, an environmental sensor, a temperature sensor, an optical path turning device, a linear interferometer, and a linear reflector;
> the laser head, the linear interferometer, and the optical path turning device are placed at an end of a stroke of each axis of the numerical control machine tool, the laser head receives the measurement preparation signal and the pulse value to emit a laser, the laser passes through the linear interferometer and is redirected by the optical path turning device towards X, Y, and Z axes of the machine tool, respectively, and the linear interferometer, in cooperation with the linear reflector, obtains error data of the X, Y, and Z axes of the machine tool, the environmental sensor collects an air temperature value, a humidity value, and an atmospheric pressure value, and transmits the air temperature value, the humidity value, and the atmospheric pressure value to the laser head to obtain environmental data, the temperature sensor collects material temperature values of the X, Y, and Z axes of the machine tool and transmits the material temperature values to the laser head to obtain expansion compensation values;

the data analysis and compensation module collects the error data, the environmental data, and the expansion compensation values for analysis to obtain precision parameters and compensation parameters, the precision parameters are used for a precision analysis of the numerical control system, and the compensation parameters are used for a data compensation of the machine tool; and
the communication module connects the numerical control system and the data analysis and compensation module, the communication module reads preset compensation settings in the numerical control system and transmits the compensation parameters and the precision parameters generated by the data analysis and compensation module to the numerical control system.

2. The machine tool rapid compensation system according to claim 1, wherein the parameter information of each axis of the machine tool includes stroke parameters of the X, Y, and Z axes of the machine tool, a soft limit position of the machine tool, and a machine tool ratio.

3. A compensation method of the machine tool rapid compensation system according to claim 2, the compensation method comprising:

> Step 1: the numerical control system reading a machine tool information and setting the trigger acquisition instruction, and the trigger acquisition module receiving the trigger acquisition instruction, and generating the machine tool operation code and the measurement preparation signal;
> Step 2: the laser interferometry measurement module receiving the measurement preparation signal for measurement, adjusting the linear interferometer and the optical path turning device for mechanical precision measurement of the axes to obtain the error data of the X, Y, and Z axes of the machine tool, and simultaneously obtaining the environmental data and the expansion compensation values;
> Step 3: the data analysis and compensation module collecting the error data, the environmental data, and the expansion compensation values for analysis to obtain first precision parameters and first compensation parameters; and
> Step 4: the numerical control system receiving the first precision parameters and the first compensation parameters for precision analysis and data compensation.

4. The compensation method according to claim 3, wherein Step 1 specifically includes:

Step 1.1: the numerical control system reading the machine tool information and setting the trigger acquisition instruction;

Step 1.2: the trigger acquisition module receiving the trigger acquisition instruction, retrieving the parameter information of each axis and the compensation point information, which is preset, of the machine tool from the numerical control system, and obtaining the machine tool operation code and the measurement preparation signal based on a data interval and a data starting point of the parameter information of each axis and the compensation point information of the machine tool;

Step 1.3: inputting the machine tool operation code into the numerical control system to wait for execution while the linear reflector is called up;

Step 1.4: executing the machine tool operation code, and the laser interferometry detection module receiving the measurement preparation signal; and

Step 1.5: the trigger acquisition module collecting the machine tool encoder position value, converting the machine tool encoder position value into the pulse value, and transmitting the pulse value to the laser interferometry measurement module.

5. The compensation method according to claim 4, wherein Step 2 specifically includes:

Step 2.1: the optical path turning device and the linear reflector adjusting an optical path for mechanical precision measurement of the axes;

Step 2.2: adjusting the optical path turning device according to a type of a measurement axis, a type and a model of the machine tool to direct a laser towards the measurement axis to adjust a light beam;

Step 2.3: the laser interferometry detection module performing detection based on the measurement preparation signal and the pulse value to obtain the error data, the environmental data, and the expansion compensation values; and

Step 2.4: storing the error data, the environmental data, and the expansion compensation values to wait for analysis by the data analysis and compensation module.

6. The compensation method according to claim 5, wherein in Step 3, the data analysis and compensation module collects the error data, the environmental data, and the expansion compensation values, analyzes and compares the error data, the environmental data, and the expansion compensation values with preset parameter standards, and obtains the first precision parameters and the first compensation parameters.

7. The compensation method according to claim 6, wherein a process of obtaining the first compensation parameters includes:

Step 3.1: performing compensation type data processing on the error data, the environmental data, and the expansion compensation values to obtain position deviation values;

Step 3.2: performing sign normalization processing on the position deviation values to obtain error values; and

Step 3.3: calculating the compensation value of error values as the first compensation parameters based on a reference point, a compensation resolution, and a calculation type.

8. The compensation method according to claim 3, further comprising Step 5, wherein specifically, in Step 5,

the data analysis and compensation module sets initial evaluation parameters, and compares the first precision parameters and the first compensation parameters with the initial evaluation parameters, when the first precision parameters and the first compensation parameters exceed a preset parameter range, Steps 1 to 4 are repeated to obtain second precision parameters and second compensation parameters.

9. The compensation method according to claim 8, wherein Step 5 further includes using the trigger acquisition module to change the compensation point information to obtain the second precision parameters and the second compensation parameters.

```
┌─────────────────────┐        ┌─────────────────────┐                    ┌──────────────┐
│ LASER INTERFEROMETRY│◄───────│ TRIGGER ACQUISITION │◄─────────┐         │              │
│ MEASUREMENT MODULE  │        │       MODULE        │          │         │  NUMERICAL   │
└─────────────────────┘        └─────────────────────┘          ├────────►│   CONTROL    │
         │                                                      │         │ MACHINE TOOL │
         ▼                                                      │         │              │
┌─────────────────────┐        ┌─────────────────────┐          │         │              │
│  DATA ANALYSIS AND  │◄──────►│ COMMUNICATION MODULE │◄─────────┘         │              │
│ COMPENSATION MODULE │        │                      │                    │              │
└─────────────────────┘        └─────────────────────┘                    └──────────────┘
```

FIG. 1

START

READ MACHINE TOOL PARAMETER INFORMATION, SET TRIGGER ACQUISITION INSTRUCTION, READ ENCODER POSITION, AND GENERATE MACHINE TOOL CODE AND MEASUREMENT PREPARATION SIGNAL

ADJUST OPTICAL PATH, AND PERFORM MECHANICAL PRECISION MEASUREMENT OF AXES

LASER INTERFEROMETRY MEASUREMENT MODULE PERFORMS MEASUREMENT BASED ON MEASUREMENT PREPARATION SIGNAL AND PULSE VALUE TO OBTAIN ERROR DATA, ENVIRONMENTAL DATA AND EXPANSION COMPENSATION VALUES

DATA ANALYSIS AND COMPENSATION MODULE GENERATES REPORT

DETERMINE WHETHER COMPENSATION IS REQUIRED BASED ON COMPARISON WITH ORIGINAL ERROR DATA

YES

NO

READ SETTINGS OF MACHINE TOOL COMPENSATION PARAMETERS, GENERATE COMPENSATION PARAMETERS, AND PERFORM ERROR PARAMETER COMPENSATION FOR NUMERICAL CONTROL SYSTEM

END

FIG. 2

FIG. 3

## INTERNATIONAL SEARCH REPORT

| International application No. |
|---|
| **PCT/CN2022/136802** |

**A. CLASSIFICATION OF SUBJECT MATTER**

G05B19/404(2006.01)i;G01B9/02(2022.01)i

According to International Patent Classification (IPC) or to both national classification and IPC

**B. FIELDS SEARCHED**

Minimum documentation searched (classification system followed by classification symbols)

G05B,G01B

Documentation searched other than minimum documentation to the extent that such documents are included in the fields searched

Electronic data base consulted during the international search (name of data base and, where practicable, search terms used)

CNPAT, CNKI, WPI, EPODOC: 数控, 机床, CNC, 误差, 温度, 补偿, 触发, 开关, 气压, 干涉, 环境, 激光, 膨胀, 湿度, 通讯, 通信, lasing, interferometric, encoder, numerical, transmit+, communicat+, trigger, start, compensation, temperature, error, humidity, air

**C. DOCUMENTS CONSIDERED TO BE RELEVANT**

| Category* | Citation of document, with indication, where appropriate, of the relevant passages | Relevant to claim No. |
|---|---|---|
| PX | CN 114442556 A (KEDE NUMERICAL CONTROL CO., LTD.) 06 May 2022 (2022-05-06) description, paragraphs [0005]-[0036] | 1-9 |
| A | CN 108334029 A (WUHAN HUAZHONG NUMERICAL CONTROL CO., LTD.) 27 July 2018 (2018-07-27) description, paragraphs [0019]-[0030] | 1-9 |
| A | CN 102789199 A (DALIAN GUANGYANG SCIENCE & TECHNOLOGY ENGINEERINGCO., LTD.) 21 November 2012 (2012-11-21) entire document | 1-9 |
| A | CN 113043061 A (BAOJI ZHONGCHENG MACHINE TOOL CO., LTD.) 29 June 2021 (2021-06-29) entire document | 1-9 |
| A | CN 109363639 A (NORTHEASTERN UNIVERSITY AT QINHUANGDAO) 22 February 2019 (2019-02-22) entire document | 1-9 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 February 2023** | **15 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**EP 4 471 516 A1**

**INTERNATIONAL SEARCH REPORT**

| International application No. |
| --- |
| **PCT/CN2022/136802** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 4765741 A (HEWLETT-PACKARD COMPANY) 22 August 1988 (1988-08-22)<br>entire document | 1-9 |

Form PCT/ISA/210 (second sheet) (July 2022)

**14**

**INTERNATIONAL SEARCH REPORT**
Information on patent family members

International application No.

**PCT/CN2022/136802**

| Patent document cited in search report | | | Publication date (day/month/year) | Patent family member(s) | | | Publication date (day/month/year) |
|---|---|---|---|---|---|---|---|
| CN | 114442556 | A | 06 May 2022 | None | | | |
| CN | 108334029 | A | 27 July 2018 | None | | | |
| CN | 102789199 | A | 21 November 2012 | None | | | |
| CN | 113043061 | A | 29 June 2021 | None | | | |
| CN | 109363639 | A | 22 February 2019 | None | | | |
| US | 4765741 | A | 22 August 1988 | EP | 0284304 | A1 | 28 September 1988 |
| | | | | EP | 0284304 | B1 | 13 November 1991 |
| | | | | HK | 201096 | A | 15 November 1996 |
| | | | | DE | 3866143 | D1 | 19 December 1991 |
| | | | | JPS | 63252203 | A | 19 October 1988 |
| | | | | JP | 2650953 | B2 | 10 September 1997 |

Form PCT/ISA/210 (patent family annex) (July 2022)